**Europäisches Patentamt**

**European Patent Office**

**Office européen des brevets**

(19)

(11) Veröffentlichungsnummer: **0 041 679**
**B1**

(12)

# EUROPÄISCHE PATENTSCHRIFT

(45) Veröffentlichungstag der Patentschrift:
**16.09.87**

(51) Int. Cl.⁴: **H 01 G 1/147,** H 01 G 4/30

(21) Anmeldenummer: **81104180.5**

(22) Anmeldetag: **01.06.81**

(54) Verfahren zur Herstellung von elektrischen Bauelementen, insbesondere Schichtkondensatoren.

(30) Priorität: **10.06.80 DE 3021786**

(43) Veröffentlichungstag der Anmeldung:
**16.12.81 Patentblatt 81/50**

(45) Bekanntmachung des Hinweises auf die Patenterteilung:
**16.09.87 Patentblatt 87/38**

(84) Benannte Vertragsstaaten:
**DE FR GB IT SE**

(56) Entgegenhaltungen:
**EP - A - 0 009 806**
**DE - A - 2 513 485**
**DE - A - 2 729 153**
**GB - A - 779 794**
**US - A - 3 654 532**

(73) Patentinhaber: **Siemens Aktiengesellschaft Berlin und München, Wittelsbacherplatz 2, D-8000 München 2 (DE)**

(72) Erfinder: **Wehnelt, Ulrich, Dipl.-Phys., Am Langenberg 2, D-8135 Söcking (DE)**

## Beschreibung

Die vorliegende Erfindung betrifft ein Verfahren zur Herstellung von mit Kontaktschichten versehenen Trägern für elektrische Bauelemente, insbesondere für Schichtkondensatoren mit Dielektrikumsschichten aus Glimmpolymerisat, bei dem auf zwei einander gegenüberliegenden Seiten eines streifenförmigen Isolierstoffbandes Kontaktschichten aus einem bei ihrem späteren Kontaktieren nicht erweichenden Metall aufgebracht werden, bei dem danach auf zumindest eine noch metallfreie Oberfläche des Isolierstoffbandes eine Metallschicht und gegebenenfalls weitere Schichten aufgebracht werden, wobei die Metallschicht so aufgebracht wird, dass sie zumindest eine der Kontaktschichten überlappt und mit dieser eine elektrisch leitende Verbindung bildet.

Ein derartiges Verfahren wurde an anderer Stelle bereits vorgeschlagen (siehe EP-A-0 009 806). Dort wird ein Isolierstoff zunächst mit Metallschichten versehen und dann in streifenförmige Träger zerschnitten. Auf die Schnittfläche wird dort die Metallschicht des Bauelementes aufgebracht.

Die Aufgabe, die der vorliegenden Erfindung zugrundeliegt, besteht in der Verbesserung der Haftfestigkeit der Kontaktschichten und in einer Verbesserung der elektrisch leitfähigen Verbindung zwischen der Metallisierung und den Kontaktschichten.

Diese Aufgabe wird bei einem Verfahren der eingangs beschriebenen Art dadurch gelöst, dass zunächst Träger von dem nicht metallisierten Isolierstoffband abgetrennt werden, dass die beim Abtrennen entstehende Trennflächen des Trägers mit den Kontaktschichten beschichtet werden und dass dann die die Metallschicht als Metallisierung der Bauelemente auf eine der noch nicht metallisierten Oberflächen des Trägers aufgebracht wird.

Durch dieses Verfahren wird einerseits die Haftfestigkeit der Kontaktschichten verbessert, da diese auf die relativ rauhen Schnittflächen aufgebracht werden. Andererseits wird die elektrisch leitende Verbindung zwischen der Metallisierung und den Kontaktschichten verbessert und sicherer gestaltet. Gemäss unserer Erkenntnis wirkt nämlich eine rauhe Oberfläche des Trägers auf ein Reissen der Metallisierung im Bereich der Kontaktierung hin. Eine glatte Oberfläche bewirkt dagegen kein Reissen der Metallisierung. Die gute Haftfestigkeit der Kontaktschichten verhindert auch, dass sich beim Auflöten von Anschlüssen die Kontaktschichten vom Träger lösen.

Als Isolierstoffband werden vorteilhaft Bänder aus Kunststoff verwendet, wobei der Kunststoff auch glasfaserverstärkt sein kann. Insbesondere eignen sich Epoxidharze und Teflon. Anstelle von Kunststoffbändern können auch Kunststoffplatten verwendet werden. Sofern die Kunststoffbänder oder Kunststoffplatten keine ausreichend glatte Oberfläche besitzen, kann eine Glättung der Oberfläche herbeigeführt werden. Dies ist beispielsweise durch Lackieren der Oberfläche vorteilhaft möglich.

Die Erfindung eignet sich vorteilhaft für kleine Bauelemente, die z.B. einen Abstand der Anschlüsse von 2,5 mm aufweisen («Chips» und «Caps»). Das Zertrennen des Isolierstoffbandes erfolgt vorteilhaft durch Sägen oder Fräsen. Die Kontaktschichten bestehen vorteilhaft aus einem relativ hochschmelzenden, lötfähigen Metall, beispielsweise aus Kupfer. Die Metallschichten können durch Sputtern, Bedampfen oder durch stromloses Auftragen hergestellt werden. Das Metall der Kontaktschichten ermöglicht durch seinen relativ hohen Schmelzpunkt ein Anlöten von Anschlussdrähten ohne zu erweichen.

In einer vorteilhaften Ausgestaltung der Erfindung wird das Isolierstoffband zersägt, mehrere Träger werden so gegeneinander gelegt, dass ihre durch das Zersägen gebildeten Trennflächen freiliegen, ihre freiliegenden Trennflächen werden mit Kontaktschichten versehen und die Träger anschliessend voneinander getrennt. So kann eine grosse Zahl von Trägern gleichzeitig mit den Kontaktschichten versehen werden. Die Kontaktschicht kann hierbei sehr dünn gewählt werden, beispielsweise zwischen 0,05 $\mu$m und 2 $\mu$m, da sie nur die Lötfähigkeit gewährleisten muss. Daher ist es ohne Schwierigkeiten möglich, die Träger nach dem Aufbringen der Kontaktschichten voneinander zu trennen, ohne dass störende Abrisskanten der Kontaktschichten entstehen.

Vorteilhaft werden die Träger senkrecht zu den Trennflächen gegeneinander versetzt mit Kontaktschichten versehen. Dabei werden die Kontaktschichten um die freiliegenden Kanten der Träger herumgezogen. Dadurch ergibt sich ein praktisch stufenloser Übergang zwischen den Kontaktschichten und dem Metallbelag des Bauelementes. Letzteres wird dadurch besonders wenig mechanisch beansprucht, insbesondere bei einer späteren Lötkontaktierung.

Eine besonders vorteilhafte Ausführung der Beschichtung ergibt sich, indem eine Kante jeder Trennfläche abgeschrägt oder abgerundet wird. Somit kann die Metallisierung des Bauelementes diese Schräge überlappend, oder auf die Kontaktschicht, die um die ungebrochene Kante herumgeführt ist, aufgebracht werden. Dabei kann sowohl die Kontaktschicht als auch die Metallisierung in einem einfachen Sputter- oder Bedampfungsverfahren abgeschieden werden. Die Träger können an der Dampfquelle eben vorbeigeführt werden. Dadurch ist der Einsatz üblicher Metallisierungseinrichtungen möglich. Ausserdem kann bei dieser Ausführungsform auf beide Trennflächen der Träger gleichzeitig bzw. ohne Umstapeln je eine Kontaktschicht aufgebracht werden.

Ein weiterer Vorteil der abgeschrägten, insbesondere der abgerundeten Kante der Trennfläche ergibt sich beim Auftragen der Kontaktschicht vor allem durch Sputtern. Beim Sputtern werden die Metallatome ohne eindeutige Vorzugsrichtung auf den Träger abgeschieden, so dass auch um die rechtwinkelige Kante herum beschichtet werden kann. Werden die Träger mit den zwei bearbeiteten Kanten für die Metallisierung gestapelt, so entsteht ein Spalt, durch den sich auf dieser nicht abgeschrägten Fläche eine ganz allmählich auslaufende Metallschicht ausbildet. Somit kann der spätere Auftrag der Metallisierung für die Bauelemente auf dieser Fläche ohne Behinderung und ohne Kante im Übergangsbereich erfolgen.

Werden relativ dicke Kontaktschichten hergestellt, so ist es vorteilhaft, die Kontaktschichten vor dem Vereinzeln der Träger auf der Fläche des Trägers abzuschneiden, auf der die Metallisierung des Bauelementes aufgebracht werden soll. Dadurch werden ebenfalls glatte Begrenzungen und Übergänge von der Kontaktschicht zur Metallisierung erreicht.

Zur Herstellung von Kondensatoren werden auf die Träger jeweils abwechselnd Metallisierungen aufgebracht, die die eine bzw. andere Kontaktschicht überlappen und durch Isolierstoffschichten voneinander getrennt werden. Als Isolierstoffschichten eignen sich insbesondere Glimmpolymerisatschichten, da diese besonders dünn ausgebildet werden können und somit eine hohe Volumenkapazität ergeben. Auf einen Träger können mehrere Kondensatoren gleichzeitig aufgebracht werden, indem die Metallisierungen benachbarter Kondensatoren durch metallfreie Streifen voneinander getrennt werden und der Träger nach der Fertigstellung der Kondensatoren im Bereich dieser Streifen aufgeteilt wird.

Bei der Herstellung von Widerständen kann die Metallisierung beide Kontaktschichten eines Trägers überlappen. In diesem Fall wird die Metallisierung vorteilhaft in Mäander, deren gerade Teile parallel zu den Kontaktschichten liegen, geformt. Auch Widerstandsnetzwerke oder RC-Netzwerke können nach dem erfindungsgemässen Verfahren hergestellt werden.

Die Erfindung wird nun anhand von drei Figuren näher erläutert. Sie ist nicht auf die in den Figuren gezeigten Beispiele beschränkt.

Die Figuren zeigen von einem Isolierstoffband abgesägte streifenförmige Träger 1, welche so aneinandergelegt sind, dass ihre Trennflächen 2 für das Aufbringen einer Kontaktschicht zugänglich sind.

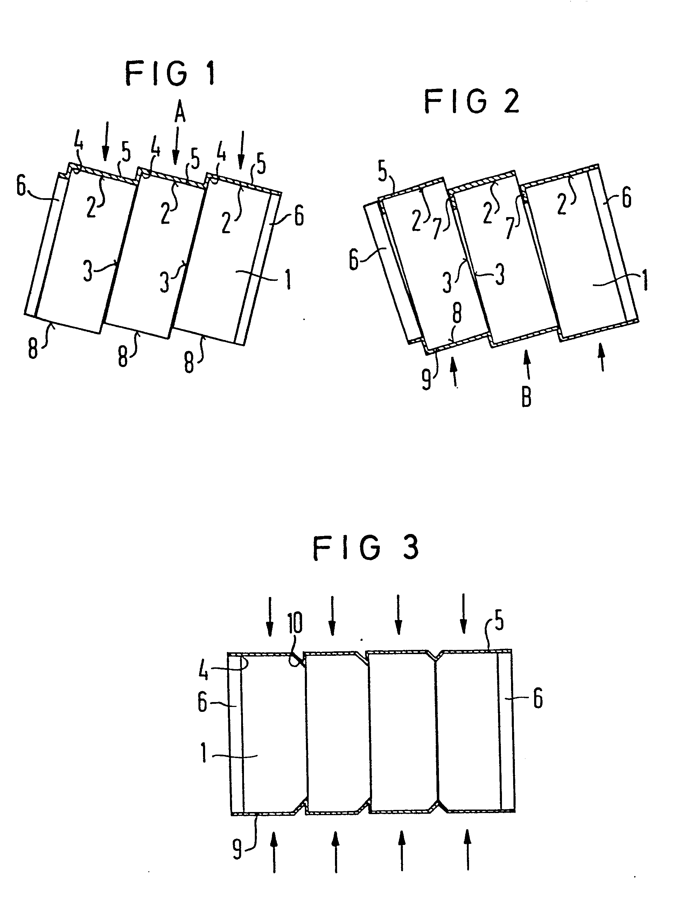

Die glatten Oberflächen 3 der Bauelemente liegen aufeinander. In Pfeilrichtung A wird eine Kontaktschicht aus Metall aufgebracht, welche gemäss Figur 1 und 2 um die Kanten 4 der Träger herumreicht. Um dies zu ermöglichen, sind die Träger in Richtung' senkrecht zu ihren Sägeflächen gegeneinander verschoben. Sie bilden gegenüber der Richtung der Beschichtung einen kleinen spitzen Winkel, so dass auch die freiliegenden Teile der glatten Oberfläche 3 von der Beschichtung erfasst werden. Zur Beschichtung wird hier vorzugsweise ein Sputtern oder Aufdampfen von Metall eingesetzt. Die dadurch erzeugte Kontaktschicht 5 darf relativ dünn ausgebildet sein. Bei Verwendung von Kupfer zur Herstellung der Kontaktschicht reicht eine Stärke zwischen 0,05 µm und 2 µm aus.

Abdeckungen 6 verhindern das gleichzeitige Beschichten der aussenliegenden, ungeschützten Flächen der Träger 1. Nach dem Aufbringen der Kontaktschichten 5 wird auf der gegenüberliegenden Seite eine Kontaktschicht 9 aufgebracht. Diese muss in der Regel von der jeweiligen Trennfläche 8 auf dieselbe Oberfläche 3 des Trägers 1 geführt sein, wie die Kontaktschicht 5.

Um dies zu erreichen, werden die Träger 1 nach dem Aufbringen der Kontaktschicht 5 voneinander gelöst und in entgegengesetzter Richtung gegeneinander senkrecht zu den Trennflächen 2 verschoben. Dazu wird vorteilhaft auf den Oberflächen 3 der Träger 1 die Kontaktschicht 5 durchschnitten. Die so erhaltenen Ränder 7 der Kontaktschicht 5 kommen dabei zwischen zwei Oberflächen 3 der Träger 1 zu liegen. Nun wird in Pfeilrichtung B auf die noch nicht metallisierten Trennflächen 8 die Kontaktschicht 9 aufgebracht, die der Kontaktschicht 5 entspricht. Nach dem Zertrennen der einzelnen Träger 1 werden die Seiten, auf denen die Ränder 7 der Kontaktschichten 5 bzw. 9 liegen, mit der Metallisierung des Bauelementes und gegebenenfalls weiteren Schichten versehen.

Figur 3 zeigt Träger 1 mit abgeschrägten Kanten 10, welche entweder einer nicht abgeschrägten Kante 4 oder einer abgeschrägten Kante 10 des benachbarten Trägers 1 gegenüberliegen können. Diese Anordnung kann gleichzeitig von beiden Seiten metallisiert werden. Nach dem Zertrennen in einzelne Träger 1 wird dann die Oberfläche 3 des Trägers, welche von den abgeschrägten Kanten 10 begrenzt ist, mit der nicht dargestellten Metallisierung und gegebenenfalls den übrigen Schichten des Bauelementes versehen. Diese Ausführungsform des Verfahrens lässt eine besonders rationelle Massenfertigung zu.

**Patentansprüche**

1. Verfahren zur Herstellung von mit Kontaktschichten versehenen Trägern für elektrische Bauelemente, insbesondere für Schichtkondensatoren mit Dielektrikumsschichten aus Glimmpolymerisat, bei dem auf zwei einander gegenüberliegenden Seiten eines streifenförmigen Isolierstoffbandes Kontaktschichten aus einem bei ihrem späteren Kontaktieren nicht erweichenden Metall aufgebracht werden, bei dem danach auf zumindest eine noch metallfreie Oberfläche des Isolierstoffbandes eine Metallschicht und gegebenenfalls weitere Schichten aufgebracht werden; wobei die Metallschicht so aufgebracht wird, dass sie zumindest eine der Kontaktschichten überlappt und mit dieser eine elektrisch leitende Verbindung bildet, dadurch gekennzeichnet, dass zunächst Träger (1) von dem nicht metallisierten Isolierstoffband abgetrennt werden, dass die beim Abtrennen entstehende Trennflächen (2, 8) der Träger (1) mit den Kontaktschichten (5, 9) beschichtet werden und dass dann die Metallschicht als Metallisierung der Bauelemente auf eine der, noch nicht metallisierten Oberflächen (3) des Trägers aufgebracht wird.

2. Verfahren nach Anspruch 1, dadurch gekennzeichnet, dass das Isolierstoffband zersägt wird, dass mehrere Träger (1) so aneinandergelegt werden, dass ihre durch das Zersägen gebildeten Trennflächen (2, 8) freiliegen, dass die freiliegenden Trennflächen (2, 8) mit Kontaktschichten (5, 9) versehen und die Träger (1) voneinander getrennt werden.

3. Verfahren nach einem der Ansprüche 1 oder 2, dadurch gekennzeichnet, dass die Träger (1) senkrecht zu den Trennflächen (2, 8) gegeneinander versetzt und so mit Kontaktschichten (5, 9) versehen werden.

4. Verfahren nach Anspruch 3, dadurch gekennzeichnet, dass die Kontaktschichten (5, 9) um die freiliegenden Kanten (4) der Träger (1) herumgezogen werden.

5. Verfahren nach einem der Ansprüche 1 bis 4, dadurch gekennzeichnet, dass zumindest eine Kante jeder Trennfläche abgeschrägt oder abgerundet wird und dass die Metallisierung des Bauelementes diese abgeschrägte bzw. abgerundete Kante (10) überlappend aufgebracht wird.

**Claims**

1. A process for the production of carriers, provided with contact layers, for electrical components, particularly but not exclusively for stacked capacitors with dielectric layers made of glow polymerisate, wherein contact layers of a metal which does not soften during their subsequent contacting, are applied to two opposite sides of an insulating strip, wherein a metal layer, and, if necessary, further layers, are then applied to at least one surface of the insulating strip which is still free of metal, the metal layer being applied in such manner that it overlaps at least one of the contact layers and forms an electrically conductive connection therewith, characterised in that carriers (1) are first separated from the non-metallised insulating strip; that the separation surfaces (2, 8) of the carriers (1), which are formed as a result of the separation, are coated with the contact layers (5, 9); and that the metal layer serving as the metallisation of the components is then applied to one of the surfaces (3) of the carrier which have not yet been metallised.

2. A process as claimed in Claim 1, characterised in that the insulating strip is sawn up; that a plurality of carriers (1) are positioned one beside another in such manner that their separation surfaces (2, 8) formed as a result of the sawing procedure remain exposed; that the exposed separation surfaces (2, 8) are provided with contact layers (5, 9) and the carriers (1) are separated from one another.

3. A process as claimed in Claim 1 or 2, characterised in that the carriers (1) are offset relative to one another at right angles to the separation surfaces (2, 8) and thus are provided with contact layers (5, 9).

4. A process as claimed in Claim 3, characterised in that the contact layers (5, 9) are drawn around the exposed edges (4) of the carriers (1).

5. A process as claimed in one of Claims 1 to 4, characterised in that at least one edge of each separation surface is bevelled or rounded and that the metallisation of the component is applied so as to overlap this bevelled or rounded edge (10).

**Revendications**

1. Procédé pour la fabrication de supports, pourvus de couches de contact, pour des composants électriques, en particulier pour des condensateurs à couches avec des couches d'un diélectrique constitué par un polymère obtenu par décharge luminescente, dans lequel on dépose sur deux côtés opposés d'un ruban d'une substance isolante, ayant la forme d'une bande, des couches de contact en un métal qui ne ramollit pas lors de la réalisation ultérieure du bonding, dans lequel on dépose ensuite sur au moins une surface du ruban de substance isolante, encore dépourvue de métal, une couche métallique et, éventuellement, d'autres couches, la couche métallique étant déposée de telle façon qu'elle recouvre au moins l'une des couches de contact et forme avec celle-ci une liaison électriquement conductrice, caractérisé par le fait que l'on sépare d'abord des supports (1) du ruban de substance isolante non métallisée, que les surfaces de séparation (2, 8) des supports (1), qui se forment lors de la séparation, sont revêtues de couches de contact (5, 9), et qu'ensuite la couche métallique est déposée, en tant que métallisation des composants, sur l'une des surfaces (3), non encore métallisées, du support.

2. Procédé selon la revendication 1, caractérisé par le fait que le ruban de substance isolante est scié, que plusieurs supports (1) sont juxtaposés de telle façon que leurs surfaces de séparation (2, 8) qui sont formées par l'opération de sciage, soient libres, que les surfaces de séparation libres (2, 8) sont pourvues de couches de contact (5, 9) et que les supports (1) sont séparés les uns des autres.

3. Procédé selon l'une des revendications 1 ou 2, caractérisé par le fait que les supports (1) sont décalés verticalement par rapport aux surfaces de séparation (2, 8) et sont ainsi pourvus de couches de contact (5, 9).

4. Procédé selon la revendication 3, caractérisé par le fait que les couches de contact (5, 9) passent autour des bords libres (4) des supports (1).

5. Procédé selon l'une des revendications 1 à 4, caractérisé par le fait qu'au moins un bord de chaque surface de séparation est biseauté ou est arrondi, et que la métallisation du composant est déposée avec recouvrement sur ce bord biseauté ou arrondi (10).

# FIG 1

# FIG 2

# FIG 3